Europäisches Patentamt

European Patent Office

Office européen des brevets

(19)

(11) Veröffentlichungsnummer: 0 004 286
A2

(12) EUROPÄISCHE PATENTANMELDUNG

(21) Anmeldenummer: 79100524.2

(51) Int. Cl.²: H 02 H 3/32

(22) Anmeldetag: 22.02.79

(30) Priorität: 14.03.78 DE 2811064

(43) Veröffentlichungstag der Anmeldung: 03.10.79
Patentblatt 79/20

(84) Benannte Vertragsstaaten: BE DE FR GB IT SE

(71) Anmelder: CMC Carl Maier + Cie AG,
Fulachstrasse 150, CH-8201 Schaffhausen (CH)

(72) Erfinder: Schwarz, Willy, In der Breitlen, CH-8476
Unterstammheim (CH)

(74) Vertreter: Scheidegger, Hans, Scheidegger Zwicky &
Co. Postfach, CH-8023 Zürich (CH)

(54) Fehlerstromschutzschalter.

(57) Der Summenstromwandler (4) des Fehlerstromschutz-schalters ist zusätzlich zu den Primär- und Sekundärwick-lungen (1, 2) mit einer Tertiärwicklung (3) versehen, deren Windungszahl mehrfach größer ist als diejenige der Sekun-därwicklung (2). An die Sekundärwicklung (2) ist der Aus-löser (5) des Schutzschalters angeschlossen, während an die Tertiärwicklung (3) ein Kondensator (9) angeschlossen ist. Durch geeignete Wahl der Windungszahl der Tertiär-wicklung (3) und der Kapazität des Kondensators (9) er-gibt sich eine hohe Ansprechempfindlichkeit des Auslö-sers (5). Die Ansprechempfindlichkeit reicht selbst bei Erregung des Stromwandlers mit Halbwellengleichstrom aus. Die Kapazität des Kondensators (9) und die Windungs-zahlen der Wicklungen (2, 3) des Stromwandlers (4) wie auch des Auslösers (5) liegen in Bereichen, die sowohl hinsichtlich Preis als auch Platzbedarf günstig sind.

## Fehlerstromschutzschalter

Die vorliegende Erfindung bezieht sich auf einen Fehlerstromschutzschalter mit einem Summenstromwandler mit mindestens einer Primärwicklung, einer die Wicklung eines
Auslösers speisenden Sekundärwicklung,und mit einem Kondensator, durch welchen ungefähr bei Netzfrequenz die
Induktivität der Wicklungen des Summenstromwandlers und
des Auslösers annähernd kompensiert ist. Ein derartiger
Fehlerstromschutzschalter ist aus der DE-AS 20 36 497 bekannt. Bei diesem Fehlerstromschutzschalter ist zum
Zwecke einer verbesserten Auslöseempfindlichkeit ein Kondensator in Serie oder parallel zur Sekundärwicklung und/
oder zur Wicklung des Auslösers geschaltet.

Um solche Fehlerstromschutzschalter billig und betriebssicher herstellen zu können, sollte im Stromkreis, bestehend aus Sekundärwicklung und Wicklung des Auslösers,
mit möglichst kleinen Windungszahlen und kräftigen Drähten, d.h. sehr kleinen Spannungen, gearbeitet werden. Dies
würde aber Kondensatoren mit grosser Kapazität bedingen,
die in der für diesen Zweck notwendigen Qualität sehr gross
und teuer wären. Zur Anpassung an geeignete, handelsübliche Kondensatoren muss deshalb die Windungszahl sowohl
der Sekundärwicklung wie auch des Auslösers wesentlich
erhöht werden, was grössere Kosten verursacht.

Der Erfindung liegt die Aufgabe zugrunde, einen Fehlerstromschutzschalter der eingangs genannten Art zu schaffen, der bei hoher Ansprechempfindlichkeit mit kleinen
Windungszahlen für die Sekundärwicklung des Wandlers und
für die Wicklung des Auslösers auskommt.

Diese Aufgabe wird erfindungsgemäss dadurch gelöst, dass der Kondensator an eine Tertiärwicklung des Summenstromwandlers angeschlossen ist, deren Windungszahl ein Mehrfaches der Windungszahl der Sekundärwicklung ist.

Der wichtigste Vorteil der Erfindung besteht darin, dass durch eine geeignete Wahl der Windungszahl dieser Tertiärwicklung der an sie angeschlossene Kondensator auf den Primär- und/oder Sekundärkreis des Wandlers abgestimmt werden kann, um genau die gewünschte Wirkung zu erzielen.

Da einerseits die Windungszahl der Wicklung des Auslösers zur optimalen Anpassung etwa 10- bis 50mal grösser sein muss als die Windungszahl der Sekundärwicklung, andererseits die Tertiärwicklung - beziehungsweise die Sekundärwicklung, wenn der Kondensator an diese angeschlossen ist - für optimale Anpassung an handelsübliche Kondensatoren etwa 50 bis 120 Windungen aufweisen muss, wird der Mehraufwand für die Tertiärwicklung durch die Reduktion der Wicklung des Auslösers bei weitem aufgewogen. Ohne Tertiärwicklung können für den Auslöser Windungszahlen bis über 1000 notwendig werden, während mit Verwendung einer Tertiärwicklung Windungszahlen unter 100 ausreichen, weil dann eine Sekundärwicklung mit nur wenigen Windungen genügt.

Aus der DE-AS 23 36 260 ist zwar ein Wandler mit Tertiärwicklung und angeschlossenem Kondensator bekannt, jedoch nicht um die Empfindlichkeit zu erhöhen, im Gegenteil, um mit Dioden unerwünschtes Auslösen bei kurzen Stromspitzen zu verhindern.

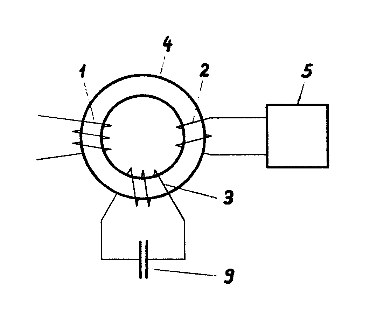

Die Erfindung ist nachstehend rein beispielsweise unter
Bezugnahme auf die Zeichnung näher erläutert.

Die einzige Figur der Zeichnung veranschaulicht schematisch
ein Ausführungsbeispiel des erfindungsgemässen Fehlerstromschutzschalters.

In der Zeichnung bezeichnet 1 eine Primärwicklung, 2 eine
Sekundärwicklung und 3 eine Tertiärwicklung eines Summenstromwandlers, der einen Eisenkern 4 aufweist. In Wirklichkeit werden in bekannter Weise meistens mindestens zwei
Primärwicklungen vorhanden sein, eine für den Hin-, eine
für den Rückleiter, für dreiphasige Stromkreise sogar
drei oder vier Primärwicklungen. Die Sekundärwicklung 2
speist wie üblich einen Auslöser 5. Die Tertiärwicklung 3
ist über einen Kondensator 9 kurzgeschlossen.

Mit diesem Kondensator 9 können die Induktivitäten der
Wicklungen des Wandlers und auch des Auslösers 5 bei
Netzfrequenz teilweise oder völlig kompensiert werden, d.h.
durch Abstimmung auf Resonanz kann bei gegebenem Primärstrom ein grösserer Strom dem Auslöser 5 zugeführt werden.
Durch den Austausch von elektromagnetischer Energie im
Auslöser gegen elektrostatische Energie im Kondensator
wird der Strom gewissermassen "aufgeschaukelt". Hier
ist besonders wichtig, dass durch eine geeignete Wahl der
Windungszahl der Tertiärwicklung 3 handelsübliche, volumenmässig kleine Kondensatoren 9 mit eher niedriger Kapazität, aber hoher Spannungsfestigkeit voll ausgenützt
werden können. Elektrolytkondensatoren mit hoher Kapazität für kleine Spannungen sollten für diesen Zweck nicht
verwendet werden, weil ihre Kapazität mit der Zeit sinkt,
vor allem, wenn sie nicht unter Spannung stehen. Hieraus
ergibt sich, dass die Windungszahl der Tertiärwicklung 3 mehrfach grösser sein muss als diejenige der Sekundärwicklung 2, z.B. um den Faktor 10 bis 100.

Diese Erhöhung der Empfindlichkeit ist insbesondere sehr interessant bei Anwendung für Fehlerstromschutzschalter, deren Primärwicklungen von pulsierendem Gleichstrom durchflossen sind (z.B. von Einweg-Gleichrichtern herrührend). Durch die Wahl eines geeigneten Kapazitätswertes des Kondensators 9 und einer passenden Windungszahl der Tertiärwicklung 3 kann erreicht werden, dass die Welligkeit eines Halbwellengleichstromes, der durch die Primärwicklung 1 fliesst, im Auslöser 5 einen sicher auslösenden Strom erzeugt, obwohl der Kern des Wandlers durch den Gleichstrom teilweise gesättigt ist und dadurch die Uebertragungseigenschaften des Wandlers verschlechtert sind.

Als weitere Ausführungsmöglichkeit sei erwähnt, dass die Sekundärwicklung 2 und die Tertiärwicklung 3 zu einer einzigen Wicklung vereinigt sein können. Der Auslöser 5 ist dann mit einer entsprechenden Anzapfung der die Sekundärwicklung 2 und die Tertiärwicklung 3 bildenden Wicklung verbunden, der Kondensator 9 mit deren Enden.

Als Beispiel sei noch angeführt, welche Windungszahlen in einem Anwendungsfall gute Resultate ergaben:

1. Kondensator an die Sekundärwicklung angeschlossen:
   Sekundärwicklung           80 Windungen
   Auslöser                  1600 Windungen

2. Mit Tertiärwicklung für den Kondensator:
   Sekundärwicklung           2 Windungen
   Tertiärwicklung            80 Windungen
   Auslöser                  40 Windungen

Es ist ersichtlich, dass durch die beschriebene erfindungsgemässe Ausbildung des Fehlerstromschutzschalters ermöglicht ist, die Windungszahlen der Wicklungen 2 und 3 des
Stromwandlers wie auch die Windungszahl der Wicklung des
Auslösers 5 verhältnismässig klein zu halten und zudem
die Kapazität des Kondensators 9 relativ niedrig zu wählen. Dies wirkt sich günstig auf den Platzbedarf und auf
den Preis aus.

0004286

P a t e n t a n s p r ü c h e

1. Fehlerstromschutzschalter mit einem Summenstromwandler mit mindestens einer Primärwicklung, einer die
Wicklung eines Auslösers speisenden Sekundärwicklung, und
mit einem Kondensator, durch welchen ungefähr bei Netzfrequenz die Induktivität der Wicklungen des Summenstromwandlers und des Auslösers annähernd kompensiert ist, dadurch gekennzeichnet, dass der Kondensator (9) an eine
Tertiärwicklung (3) des Summenstromwandlers angeschlossen
ist, deren Windungszahl ein Mehrfaches der Windungszahl
der Sekundärwicklung (2) ist.

2. Fehlerstromschutzschalter nach Anspruch 1, dadurch
gekennzeichnet, dass die Windungszahl der Tertiärwicklung
(3) mindestens das Zehnfache der Windungszahl der Sekundärwicklung (2) beträgt.